# EUROPEAN PATENT APPLICATION

(11) **EP 3 981 254 A1**
(43) Date of publication of application: **13.04.2022**
(21) Application number: 21200956.7
(22) Date of filing: 05.10.2021
(51) Int. Cl.: A23B 4/044, C10L 5/44, C10L 5/48

(54) **A METHOD FOR MANUFACTURING SMOKING BRIQUETTES, A SMOKING BRIQUETTE, A PACKAGE, AND UTILIZATION OF FOOD WASTE**

(30) Priority: 06.10.2020 FI 20205973
(71) Applicant: Leivon Leipomo Oy, 33530 Tampere (FI)
(72) Inventor: Räntilä, Anssi, Tampere (FI)
(74) Representative: Berggren Oy

(57) **Abstract**

Food waste is reduced by utilizing food waste in compressed smoking products. A method for manufacturing compressed smoking products comprises drying and crushing (102) food waste, forming (106) a mixture comprising the crushed and dried food waste and wood-based material, and feeding (108) the mixture to a compressing machine.

## Description

### Field of the invention

The invention relates to a method for manufacturing a compressed smoking product, a compressed smoking product, a package, and utilization of food waste.

### Background of the invention

For providing customers with a sufficient range of bakery products, a wide range of bakery products should be available in food stores until the end of the sales day. This means that a significant part of the bakery products may end up in waste at the end of the sales day. Wastage may be entailed not only by unsold bakery products but also by remaining production lots. The amount of wastage reduces not only the efficiency of utilization of raw materials but also the efficiency of the entire production.

### Brief summary of the invention

It is thus an aim of the invention to develop a solution to at least some of the above mentioned problems. The aim of the invention is achieved by a method, a compressed smoking product, a package, and utilization of food waste which are characterized by what is presented in the independent claims 1, 9, 14, 15. Independent claims 2 to 8 and 10 to 13 relate to advantageous embodiments of the invention.

### Description of the drawings

In the following, the invention will be described with reference to the enclosed drawings, in which
Fig. 1 shows a method and the utilization according to at least some embodiments of the present invention;
Fig. 2 shows a device according to an embodiment of the present invention; and
Fig. 3 shows a product package according to an embodiment of the present invention.

### Detailed description of the invention

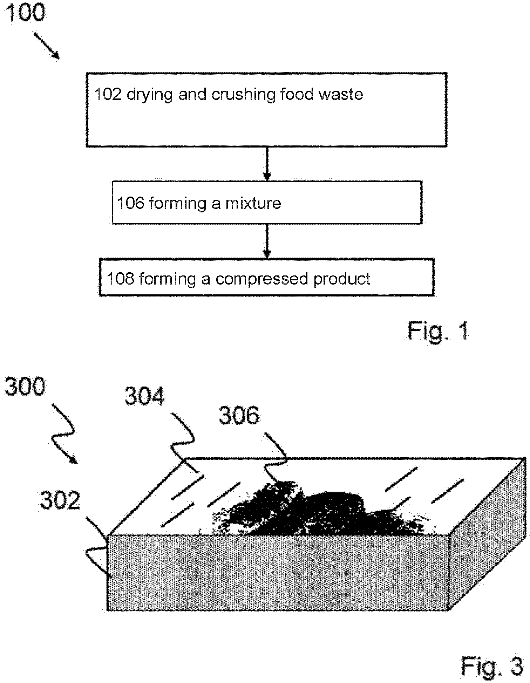

Figure 1 shows the method and the utilization according to at least some embodiments of the present invention. Thanks to the method 100, food waste can be reduced by utilizing the food waste in the manufacture of compressed smoking products. By using the method, it is possible to utilize even all the food waste from a given source, such as a food store or a bakery, in compressed smoking products. In addition to utilizing the food waste, the use of food waste in the manufacture of compressed smoking products provides many advantages which may be manifest in at least one of the following: material efficiency in the manufacture of compressed smoking products, smoke production capacity of compressed smoking products, properties of smoke produced by compressed smoking products, properties of compressed smoking products, properties of products smoked by using compressed smoking products containing food waste, and applicability of compressed smoking products for versatile use in various appliances for smoking.

The utilization of food waste in the manufacture of compressed smoking products makes it possible to reduce the amount of wood-based material, such as smoke chips, in compressed smoking products, whereby a higher volume of compressed smoking products can be made from a batch of wood-based material, improving the material efficiency of the compressed smoking products. Examples of wood-based materials include wood material which can be obtained by mechanical processing of one or more wood species. Mechanically processed wood material may include wood pieces, wood chips, saw dust, and/or splinters. Preferably, the wood species used for compressed smoking products generates a smoke specific to the wood species, giving a flavour to the product, such as food, to be smoked. Examples of wood species include at least alder, cherry, apple, beech, maple, oak, plum, and/or hickory.

Properties of compressed smoking products can be measured by known methods for at least the following variables: compression strength [Pa], smoke production capacity [l/kg], density [kg/m^3] and water receptivity [weight%].

Compressed smoking products produced by the method 100 are suitable for use in small as well as large appliances for smoking. Appliances for smoking, such as smoking ovens, may be portable devices or stationary devices. In an appliance for smoking, a compressed smoking product is brought to a smoking temperature, at which the wood material and the food waste in the compressed smoking product start to generate smoke, to smoke an item placed within the appliance. Appliances for smoking may be electric, gas, wood, briquette, or coal fired appliances. It should be noted that in addition to those mentioned above, appliances for smoking may be based on another source of energy as well. During smoking, burning is slow, whereby the item, such as food, placed in the appliance can be cooked at a relatively low temperature while providing the food with a flavour and improving its preservability.

Compression strength describes the strength of the compressed smoking product against external forces. A compressed smoking product having a high compression strength is resistant to external forces, whereby it requires more strength to break into pieces than a compressed smoking product having a low compression strength. A compressed smoking product having a low compression strength can be broken down even manually, so that suitable pieces can be broken from a single compressed smoking product for various appliances for smoking. Thus, the compressed smoking product is suitable for use in a versatile way in various appliances for smoking. On the other hand, breaking a compressed smoking product having a low compression strength into pieces renders it unnecessary to place an entire compressed smoking product into the appliance for smoking and to consume it at one time of smoking, but a suitable piece can be broken off the compressed smoking product for each time of smoking. On the other hand, a low compression strength provides the compressed smoking product with a structure where the burning of the compressed smoking product will quickly proceed deep into the compressed smoking product during the smoking, whereby it is possible to utilize of the whole compressed smoking product for smoke production.

Smoke production capacity represents the amount of smoke that can be generated by a single compressed smoking product. Particularly in smaller appliances for smoking and when a short smoking time is applied, low smoke production may be sufficient to give a smoking result. Thus, a small amount of wood-based material may be sufficient for each time of smoking. However, to control smoke production during smoking, it may be advantageous that the compressed smoking product containing wood-based material has a large external size even if the amount of wood-based material in the compressed smoking product were small. The large external size makes it possible to control the ignition of the wood-based material and thereby the smoke production in different parts of the compressed smoking product. This is the case, for example, when the compressed smoking product is disc-shaped and placed on a warm surface. Thus, the wood-based material facing the warm surface may start smoke production before the wood-based material of the compressed smoking product farther away from the warm surface. In this way, the smoke production by the compressed smoking product can be better distributed over the whole smoking time.

Density affects the flammability of the compressed smoking product. A compressed smoking product having a low density is more flammable than a compressed smoking product having a high density.

Water receptivity represents the capacity of the compressed smoking product to absorb water. The water receptivity of the compressed smoking product is essential when the compressed smoking product is to be moistened before it is placed in an appliance for smoking and smoking is started. By moistening the compressed smoking product, it is possible to adjust the smoke production by the compressed smoking product during smoking. The compressed smoking product can be moistened, for example, by immersing it in a dish holding water, whereby water is absorbed into the compressed smoking product. A compressed smoking product having a high water receptivity will be capable of quickly absorbing the amount of water needed for adjusting the smoke production, whereby the time used for moistening can be kept short.

The method 100 can be carried out when one or more batches of food waste are available. The food waste may be, for example, industrially produced food items, such as bakery products, which are not of marketable quality. With respect to its quality and nutritional value, an industrially produced food item is fit for human consumption without cooking. An industrially produced food item is made in an industrial process where raw materials, or a mixture made of raw materials, are processed in a production line having one or more processing steps. From a raw material or raw materials input in the first processing step, an output can be obtained which may be an industrially produced food item or an intermediate product for making an industrial produced food item. An industrially produced food item or intermediate product can be input in one or more following processing steps in the production line. The output from the last processing step in the industrial process is an industrially produced food item which can be packed in a sales package and transported for retail sale to consumers. In an industrial process, one or more raw materials may be input in each processing step, where necessary, to obtain an intermediate product or an industrially produced food item. Factors affecting the marketability of food items may include at least the quality, perishability, best before date and expiry date of the food items. Food waste of bakery products may comprise, for example, bakery products made of one or more cereal crops. The cereal crop may be, for example, oat, barley, rye, or wheat. The food waste can be received from, for example, a food store or a bakery, whereby the food waste from the food store or bakery can be reduced or even totally utilized in the manufacture of compressed smoking products.

The method starts with step 102, in which food waste is dried and crushed. In step 106, a mixture is formed which comprises the crushed and dried food waste as well as wood-based material. In step 108, the mixture is input in a compressing machine. The compressing machine compresses the mixture at a high pressure, whereby a solid piece, i.e. a compressed product, is formed of the mixture by the combined effect of pressure and temperature, which compressed product can be used for smoking, for example in an appliance for smoking. It should be noted that the compressed smoking product output from the compressing machine will achieve its final hardness upon cooling. The cooling time can be reduced if the compressing machine has a cooling line for cooling the compressed smoking products. Examples of compressing machines comprise at least mechanical plunger moulding presses, hydraulic plunger moulding presses, and spindle presses.

According to an example, in step 102, the food waste is dried in a dryer. The temperature and/or the drying time in the dryer can be controlled, whereby the dried food waste can be provided with a dry shelf life of at least 6 months or more, such as 1 year, 2 years, or 3 years. Controlling the temperature and/or the drying time in the dryer makes it possible to manufacture compressed smoking products having at least some desirable properties. The dry shelf life ensures stability of compressed smoking products made from food waste in a place and/or a package away from light and heat. Adequate dry shelf life can be confirmed by means of the moisture content, for example. Adequate dry shelf life can be achieved when, by controlling the temperature and drying time in the dryer, a maximum moisture content of 12% is obtained for the food waste. Consequently, the moisture content may be 12% or lower than 12%, such as in the range between 12% and 1%. The moisture content may be an average value, such as 10% +/-2 percentage points.

According to an example, in step 102, the food waste comprises two or more bakery products, for example sweet pastries and/or bread. The raw materials of the bakery products may comprise raw materials with or without gluten, such as beech wheat, black bean, white bean, broad bean, chick pea, quinoa, raisin, almond, coconut, rye, wheat, barley, oat, cane sugar, and/or beet sugar. Various bakery products and their ingredients have an effect on the quality of the smoke generated by the compressed smoking product and thereby on the properties of the product to be smoked, such as its flavour and/or colour. For example, different cereal crops produce a smoke characteristic to each cereal, having an effect on the flavour of the product to be smoked. For example, raisins and sugars may affect at least the colour of the product to be smoked.

According to an example, in step 102 the food waste is crushed in a crusher, whereby crushed food waste is obtained whose grain size makes it possible to mix the food waste with the wood-based material to form a substantially homogeneous mixture in step 106. The grain size of the crushed food waste can be selected in relation to the grain size of the wood based material. The grain size of the crushed food waste may be, for example, smaller than 5 cm, such as between 1 cm and 5 cm, or between 1 cm and 3 cm, whereby the grain size of the wood-based material may be comparable to the grain size of the crushed food waste. The grain size of the wood-based material can be determined on the basis of, for example, the length, width and/or depth of the material pieces of the wood-based material. Thus, the grain size of the wood-based material comparable to the grain size of the food waste may be, for example, a grain size where the wood-based material comprises material pieces having substantially the same length, width and/or depth as the grains of the food waste.

It should be noted that in step 102, the drying of the food waste can be carried out before the crushing, or vice versa. The crushing and drying can take place in separate devices or in the same device.

According to an example, in step 106, the mixture is formed with a mixer, into which the crushed and dried food waste and the wood-based material are input. Advantageously, the crushed and dried food waste and the wood-based material are mixed to form a homogeneous mixture, whereby a homogeneous product can be output from the compressing machine.

According to an example, in step 106, the moisture content of the wood-based material is sufficiently low to keep the moisture content of the compressed smoking product low and to provide the compressed smoking product with a sufficient dry shelf life.

According to an example, the mixture formed in step 106 contains wood-based material and food waste in a ratio of 1:1, preferably in a ratio of 1:2 and more preferably in ratio of 1:3, or contains an even higher proportion of food waste, the rest consisting of wood-based material. The ratio between wood-based material and food waste makes it possible to manufacture compressed smoking products having at least some desirable properties. The ratio between wood-based material and food waste can be measured at least on the basis of their masses. Thus, 100 g of the mixture may comprise 50 g of wood-based material and 50 g of food waste, about 33.33 g of wood-based material and 66.67 g of food waste, 25 g of wood-based material and 75 g of food waste, or more than 75 g of food waste, the rest being wood-based material. As the share of the food waste increases, the amount of wood-based material needed for the compressed smoking product decreases, improving the material efficiency of the manufacture of the compressed smoking product. On the other hand, the higher the content of food waste in the mixture, the less smoke is obtained from the wood material in the compressed smoking product, whereby the proportion of the smoke generated from the food waste is increased. Consequently, by the ratio between the food waste and the wood material, it is possible to adjust the composition of the smoke obtained from the compressed smoking product and thereby also the properties provided by the compressed smoking product for the product to be smoked. The composition of the compressed smoking product may affect, among other things, the colour and/or flavour of the product to be smoked. In an example, the food waste contains sugar, which, when burning in the compressed smoking product, generates smoke that provides the product to be smoked with a pleasant colour characteristic to sugar. In an example, the food waste contains rye bread which, when burning in the compressed smoking product, generates smoke that provides the product to be smoked with a flavour characteristic to rye. On the other hand, with the ratio between food waste and wood material, it is possible to adjust the compression strength of the compressed smoking product. The compression strength of compressed smoking products formed of a mixture of food waste and wood-based material may be lower than that of compressed smoking products which are made of wood-based materials without food waste and which are commercially available from a number of manufacturers. In particular, low compression strength has a beneficial effect on the burning of the compressed product as completely as possible, whereby the burning also proceeds to the inside of the compressed product. Low compression strength may also allow manual breaking of the compressed smoking product into pieces, whereby it is not necessary to use the whole compressed smoking product, for example a disc, at one time of smoking. On the other hand, the compressed smoking product, such as a disc, can be easily apportioned as such for each time of smoking.

According to an example, in step 108, the mixture is input in a briquetting machine or a pelleting machine. A pelleting machine produces pellets from the mixture, the pellets being particularly suitable for pellet-compatible appliances for smoking. A briquetting machine produces briquettes from the mixture, the briquettes being particularly suitable for briquette-compatible appliances for smoking. Briquette-compatible smokers may comprise an input device and an automatic control device, whereby only briquettes of a given size are suitable for use in such appliances for smoking. Pellet-compatible smokers may comprise an input device and an automatic control device, whereby only pellets of a given size are suitable for use in such appliances for smoking.

Ultimately, then, it is the type of the machine into which the mixture is input, a briquetting machine or a pelleting machine, that will determine the shape and size of the compressed smoking product, as well as the type of appliance for smoking in which the compressed smoking product can and/or cannot be used. Naturally, it should be noted that also by adjusting the size of the crushed food waste and the size of the wood-based material it is possible to have an effect on the properties of the compressed smoking product and its suitability for use as briquettes or pellets, for example.

According to an example, in step 106, the wood-based material comprises at least alder, cherry, apple, beech, maple, oak, plum, and/or hickory. The wood-based material used for the compressed smoking product provides the product to be smoked with a flavour characteristic to the wood-based material.

According to an example, in step 108, the compressing machine produces a compressed smoking product whose compression strength is lower than that of a compressed smoking product made without food waste. The compression strength of a compressed smoking product containing food waste and wood-based material can be compared with the compression strength of compressed smoking products made of a wood-based material without food waste by a compressing machine. The compression strengths can be compared, for example, by applying the compressing machine with the same operating parameters for a mixture containing food waste and for a mixture containing wood-based material but no food waste. Examples of operating parameters comprise at least compression pressure. Other operating parameters may include the size and shape of the compressed smoking product. It should be noted that the properties, such as size and moisture content, of the wood-based material used for the different mixtures will thus remain unaltered.

According to an example, in step 108, the compressed smoking product is cut into pieces. After compressing, the mixture can have an elongate, such as cylindrical shape, whereby the compressed smoking product can be cut into pieces in a cross-direction to the longitudinal direction of the compressed smoking product, and thereby to form pieces of compressed smoking product, such as compressed smoking discs or smoking briquette discs.

According to an example, in step 108, a compressed smoking product is obtained which contains food waste and wood-based material compressed to shape. The compressed food waste and wood-based material can thus be handled in one piece, whereby the compressed smoking product can be easily dispensed into an appliance for smoking. The shape may be, for example, discoid. Other shapes are also feasible, and they comprise at least shapes fitted to comply with the device for feeding the compressed smoking product, such as a briquette or pellet feeding device, used in the appliance for smoking.

According to an example, in step 108, a compressed smoking product is obtained whose dry shelf life is at least 6 months or longer, such as 1 year, 2 years or 3 years. For example, the moisture content of the compressed smoking product may be not higher than 12%. Consequently, the moisture content may be 12% or lower than 12%, such as in the range between 12% and 1%. The moisture content may be an average, for example 10% +/-2 percentage points.

According to an example, step 106 comprises that an adhesive agent, such as collagen, is added to the mixture. In this way, in step 108, the cohesion of the compressed smoking product to be formed can be improved.

According to an example, in step 102, the food waste comprises high-protein food waste, such as food waste with a protein content higher than 8% per 100 g, preferably higher than 10%, for example 10.8% per 100 g. Examples of high-protein food waste comprise bakery products, such as bread. Thus, less adhesive can be used in the manufacture of the compressed smoking product, and the use of a separate adhesive in the compressed smoking product can even be eliminated. A separate adhesive may affect the properties, such as the flavour and colour, of the product to be smoked by the compressed smoking product.

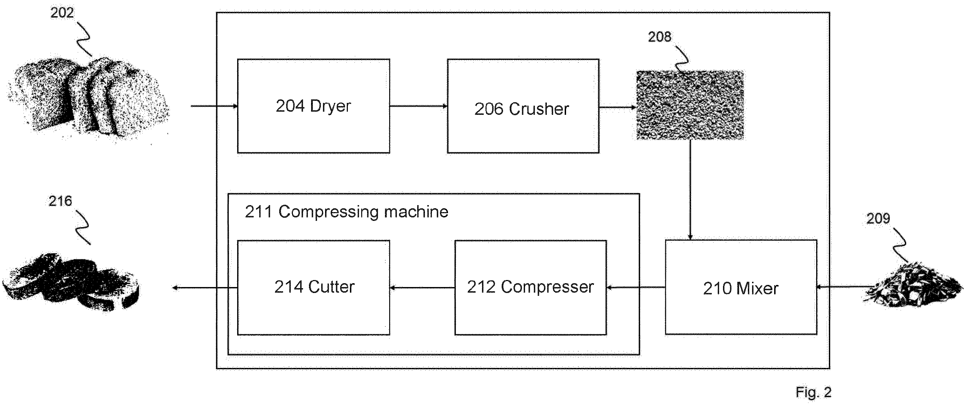

Figure 2 shows an apparatus according to an embodiment of the present invention. The apparatus may comprise means for implementing one or more steps described in connection with Fig. 1. The apparatus is described as functional units which may vary in structural implementation. The structure of the device may be implemented as a single unit placed in the same location of use, but also as two or more structural units which may be placed in the same or separate locations of use. In the implementation of the apparatus in several separate locations for use, material flows can be implemented by logistic arrangements known to a person skilled in the art.

According to an example, the apparatus comprises a dryer 204 for drying food waste and a crusher 206 for crushing the food waste; a mixer 210 for mixing the crushed and dried food waste 208 with wood-based material 209; and a compressing machine 211 for forming a compressed smoking product from the mixture.

In other examples of the apparatus, the implementation of the apparatus may be different. For example, the dryer 204 and the crusher 206 may be placed in a different order in relation to the direction of the material flow.

In an apparatus according to an example, the dryer 204 is configured to receive food waste 202 and to dry the received food waste. The crusher 206 is configured to receive the food waste dried by the dryer and to crush it. The mixer is is configured to receive crushed food waste 208 from the crusher, and wood-based material 209, and to form a mixture of these. The wood-based material can be input in the mixer by a separate feeding device or manually. The formed mixture is input in the compressing machine 211 in which the mixture is subjected to a high pressure. Thus, by the combined effect of pressure and temperature, a solid piece 216 is formed of the mixture, i.e. a compressed product, in this case a compressed smoking product which can be used for smoking e.g. in an appliance for smoking. It should be noted that the mixture to be input in the compressing machine comprises wood-based material and dried food waste unattached to each other, whereby single wood grains and food waste grains can be moved with respect to each other and picked up separately from each other. Consequently, the mixture to be input in the compressing machine does not have a shape as such, but it will assume the shape of the vessel in which the mixture is placed. By the combined effect of the pressure and the temperature, the compressing machine will fix the wood-based material and the food waste of the mixture together and give the mixture a shape. The shape may be, for example, an elongate cylinder. It should be noted that the compressed smoking product output from the compressing machine will achieve its final hardness upon cooling. The cooling time can be reduced if the compressing machine has a cooling line for cooling the compressed smoking products. Preferably, the compressing machine comprises a cutting device 214 for dividing the compressed product by cutting into pieces of a given size. Thus, the compressing machine may comprise a compressing device 212 for compressing the mixture obtained from the mixer to a compressed product, and the compressed product formed by the compressing device can be fed further to the cutting device. The shape of the compressed product may be an elongate cylinder which is divided by the cutting device into pieces of a given size. The compressed smoking product obtained in this way may have a discoid shape. In other words, the compressed smoking product can be called a smoking disc.

Figure 3 shows a package according to an embodiment of the present invention. The package 300 comprises a tray part 302 and a lid part 304 which can be connected to each other. One or more compressed smoking products can be placed in the tray part, whereby the compressed smoking products are placed under the lid part when the lid part and the tray part are connected to each other. The tray part has a volume suitable for containing compressed product 306 made by the method described in connection with Fig. 1, for example. Compressed smoking products can be packed in the package by a packaging machine or manually. The compressed smoking products may be, for example, compressed discs. In an example, the bottom of the tray may have a size sufficient for at least one compressed disc. Thus, the compressed disc may lie on the bottom of the tray so that it does not extend higher than flush with the edges of the tray part. On the other hand, the compressed discs can be placed upright in the tray part, and several compressed discs can be positioned upright, side by side, in the tray part, whereby the height of the tray part may be greater, for example equal to the diameter of the discs. The lid part may be preferably transparent, whereby the amount of compressed product contained in the product package can be checked without opening the package. Preferably, the tray part is made of aluminium, such as aluminium foil, whereby the tray part is resistant to high temperatures and it can be placed together with the compressed smoking product inside the appliance for smoking. When the tray part is used for smoking, the tray part is placed inside the appliance for smoking, and the tray part contains compressed smoking product, for example one or more smoking discs. In this way it is easy to dispense the compressed smoking product, particularly into an appliance for smoking without a feeding device, and after the smoking has been completed, the used smoking disc can be removed from the appliance for smoking simply by removing the tray part from the appliance for smoking. The lid part of the product package may be made of a transparent material, such as plastic, preferably recycled plastic. The lid part does not have to be heat-resistant, and it can be removed before the tray part is used for smoking. Furthermore, if the package contains more than one compressed smoking product, superfluous compressed smoking products have to be removed before the smoking tray is placed in the appliance for smoking. In this way, it is easy to select the amount of compressed smoking product for each time of smoking.

In some embodiments, the compressed smoking product is made without separate adhesives. In such a case, at least lignin of the wood-based material will act as an adhesive in the compressed smoking product.

In some cases, features presented in this application can be used as such, irrespective of other features. On the other hand, features presented in this application can be combined, where necessary, to make different combinations.

It will be obvious for a person skilled in the art that technological advances will entail a variety of implementations of the basic idea of the invention. Thus, the inventions and the embodiments are not limited by the examples described above, but they can be varied within the scope of the claims.

## Claims

1. A method for manufacturing a compressed smoking product, **characterized in that** the method comprises:
- drying and crushing (102) waste of industrially produced food items;
- forming (106) a mixture comprising the crushed and dried waste of industrially produced food items and wood-based material; and
- feeding (108) the mixture into a compressing machine.

2. The method according to claim 1, wherein the moisture content of the dried waste of industrially produced food items is not higher than 12%.

3. The method according to claim 1 or 2, wherein the mixture contains wood based material and waste of industrially produced food items in a ratio of 1:1, preferably in a ratio of 1:2 and more preferably in a ratio of 1:3, or comprising an even higher share of waste of industrially produced food items, the rest being wood-based material.

4. The method according to any of the claims 1 to 3, wherein the wood-based material comprises mechanically worked wood material, such as wood pieces, wood chips, saw dust, and/or splinters.

5. The method according to any of the claims 1 to 4, wherein the wood-based material comprises alder, cherry, apple, beech, maple, oak, plum, and/or hickory.

6. The method according to any of the claims 1 to 5, wherein the mixture is fed into a briquetting machine or a pelleting machine.

7. The method according to any of the claims 1 to 6, wherein the waste of industrially produced food items comprises one or more bakery products, for example sweet pastries and/or bread.

8. The method according to any of the claims 1 to 7, wherein the waste of industrially produced food items comprises high-protein waste of industrially produced food items, for example waste of industrially produced food items having a nutrient content of protein more than 8% per 100 g, preferably more than 10%, for example 10.8 g per 100 g.

9. A compressed smoking product, **characterized in that** the compressed smoking product contains waste of industrially produced food items and wood-based material compressed to shape.

10. The compressed smoking product according to claim 9, having a moisture content not higher than 12 %.

11. The compressed smoking product according to claim 9 or 10, comprising smoking chips and waste of industrially produced food items in a ratio of 1:1, preferably in a ratio of 1:2 and more preferably in a ratio of 1:3, or comprising an even higher share of waste of industrially produced food items, the rest being wood-based material.

12. The compressed smoking product according to any of claims 9 to 11, wherein the wood-based material comprises mechanically processed wood material, such as wood pieces, wood chips, saw dust, and/or splinters.

13. The compressed smoking product according to any of the claims 9 to 12, wherein the wood-based material comprises alder, cherry, apple, beech, maple, oak, plum, and/or hickory.

14. A package comprising a tray part and a lid part which can be connected to each other, and a compressed smoking product according to any of the claims 9 to 13 placed in the tray part, wherein the compressed smoking product is placed below the lid part when the lid part and the tray part are connected to each other.

15. Use of waste of industrially produced food items for the manufacture of compressed smoking products.
